## Europäisches Patentamt

## European Patent Office

## Office européen des brevets

(19)

(11) Veröffentlichungsnummer: **0 150 704**
**B1**

(12) **EUROPÄISCHE PATENTSCHRIFT**

(45) Veröffentlichungstag der Patentschrift:
**16.03.88**

(51) Int. Cl.⁴: **B 21 F 27/10,** B 23 K 11/30

(21) Anmeldenummer: **84890251.6**

(22) Anmeldetag: **19.12.84**

(54) **Nach der elektrischen Widerstandsmethode arbeitende Gitterschweissmaschine.**

(30) Priorität: **13.01.84 AT 94/84**

(43) Veröffentlichungstag der Anmeldung:
**07.08.85 Patentblatt 85/32**

(45) Bekanntmachung des Hinweises auf die Patenterteilung:
**16.03.88 Patentblatt 88/11**

(84) Benannte Vertragsstaaten:
**BE CH DE FR GB IT LI LU NL SE**

(56) Entgegenhaltungen:
**AT-B-248 841**
**AT-B-372 632**
**DE-B-2 048 855**
**DE-C-634 437**
**FR-A-2 116 398**
**US-A-1 866 382**
**US-A-2 266 424**
**US-A-3 308 262**

(73) Patentinhaber: **EVG Entwicklungs- u. Verwertungs-Gesellschaft m.b.H., Vinzenz- Muchitsch-Strasse 36, A-8011 Graz (AT)**

(72) Erfinder: **Gött, Hans, Dipl.- Ing.,
Petersbergenstrasse 69, A-8042 Graz (AT)**
Erfinder: **Ritter, Josef, Dr. Dipl.- Ing.,
Stenggstrasse 33, A-8043 Graz (AT)**
Erfinder: **Ritter, Gerhard Dr.Dipl.- -Ing., Unterer
Plattenweg 47, A-8043 Graz (AT)**
Erfinder: **Ritter, Klaus, Dipl.- Ing., Peterstalstrasse
157, A-8042 Graz (AT)**

(74) Vertreter: **Holzer, Walter, Dipl.- Ing.,
Patentanwälte Dipl.- Ing. Dr.techn. Schütz
Alfred Dr.phil. Mrazek Engelbert Dipl.- Ing.
Holzer Walter Dipl.- Ing. Pfeifer Otto
Fleischmanngasse 9, A-1040 Wien (AT)**

EP 0 150 704 B1

LIBER, STOCKHOLM 1988

## Beschreibung

Die Erfindung betrifft eine nach der elektrischen Widerstandsmethode arbeitende Gitterschweißmaschine mit kontinuierlichem Vorschub einer Drahtschar in Längsrichtung der herzustellenden Gitterbahn und oberhalb und unterhalb dieser Drahtschar angeordneten Reihen von Elektroden und Gegenelektroden.

Maschinen dieser Gattung, bei welchen in Längsrichtung eine Schar gerader Drähte vorgeschoben und diese Längsdrahtschar mit in Abständen zugeführten geraden Querdrähten zu einem Orthogonalgitter mit Rechteckmaschen verschweißt wird, sind beispielsweise aus der AT-B-357 005 und aus der US-PS-1 866 382 bekannt. Eine andere Maschine der gleichen Gattung, der in Längsrichtung eine Schar zickzackförmig vorgebogener Drähte derart zugeführt wird, daß die Wellenscheitel benachbarter Drähte einander überlappen, und bei der durch Schweißung dieser Überlappungsstellen ein sogenanntes Diagonalgitter mit Rautenmaschen erhalten wird, ist in der AT-B-372 632 beschrieben. Nachfolgend werden die Kreuzungsstellen der Längs- und Querdrähte von Orthogonalgittern mit Rechteckmaschen ebenso wie die Überlappungsstellen der Wellenscheitel der zickzackförmig gebogenen Drähte von Diagonalgittern mit Rautenmaschen als "Drahtknoten" bezeichnet, um bei der Beschreibung der vorliegenden Erfindung beide Varianten von Gitterschweißmaschinen der einleitend angegebenen Gattung zu erfassen.

Wegen des kontinuierlichen Drahtvorschubes erfolgt bei den vorstehend behandelten Gitterschweißmaschinen die Schweißung mittels Rollenelektroden, die beim Schweißvorgang über die zu verschweißenden Drahtknoten rollen, oder mittels Elektroden in Form von Rollensektoren, die während des Schweißvorganges zu einer Abwälzbewegung über die Drahtknoten gezwungen und in den Pausen zwischen den Schweißvorgängen in ihre Ausgangslage zurückgeführt werden.

Das Schweißen mit Rollenelektroden und Rollensektorelektroden bereitet insoferne gewisse Schwierigkeiten, als der Strom je nach der Dicke der miteinander zu verschweißenden Drähte mehr oder weniger lang auf den Drahtknoten einwirken muß, und weil nach erfolgtem Verschweißen die Schweißstelle noch eine bestimmte Zeit unter Druck gehalten werden muß, um ein Konsolidieren der frischen Schweißverbindung sicherzustellen.

Während der gesamten, für das Einwirken des Schweißstromes auf den Drahtknoten und für das sogenannte Nachpressen erforderlichen Zeit kann bei Verwendung von Rollenelektroden und Rollensektorelektroden das Schweißgut nur eine relativ kurze Strecke durchlaufen, längs welcher sich die Elektroden am Drahtknoten abwälzen. Da diese Strecke bei gegebenem Rollen- und Drahtdurchmesser eine fest vorgegebene Länge hat, ist durch sie bereits die zulässige Vorschubgeschwindigkeit des herzustellenden Gitters festgelegt. Diese läßt sich nur steigern, indem der Durchmesser der Rollen vergrößert wird. Große Rollendurchmesser erfordern jedoch einen erheblichen Aufwand an teurem Elektrodenmaterial.

Ein weiteres, noch nicht befriedigend gelöstes Problem bildet bei Rollenelektroden und Rollensektorelektroden die möglichst verlustlose Zuführung des Schweißstromes trotz Verschleiß und Verschmutzungsgefahr.

Aufgabe der Erfindung ist es deshalb, eine Gitterschweißmaschine der einleitend angegebenen Gattung derart auszubilden, daß auch bei kontinuierlichem Drahtvorschub mit den bekannten würfelförmigen Einzelelektroden gearbeitet werden kann, die nur geringen Aufwand an Elektrodenmaterial erfordern, leicht und billig herstellbar sowie auch leicht auswechselbar sind, nach Verschleiß ohne Schwierigkeiten durch Nachschleifen mehrmals wieder verwendungsfähig gemacht werden können und über fest mit ihnen und mit der Stromquelle verbundene biegsame Stromzuleitungen praktisch verlustlos angespeist werden können. Der Ersatz der Rollen- bzw. Rollensektorelektroden durch sich nicht abwälzende würfelförmige Elektroden soll aber in solcher Weise erfolgen, daß eine wesentliche Vergrößerung der die Arbeitsgeschwindigkeit begrenzenden bewegten Massen vermieden wird.

Die geschilderte Aufgabe ist bei einer gemäß der Erfindung ausgebildeten Gitterschweißmaschine dadurch gelöst, daß die Elektroden und die Gegenelektroden in Abständen längs zweier im wesentlichen parallel zur Vorschubbahn der Drahtschar in deren Längsrichtung hin- und herbewegbar gelagerter, auf gemeinsame Bewegung gekuppelter und im Schweißtakt antreibbarer Elektrodenbalken angeordnet sind, wobei zumindest die Elektroden eines Elektrodenbalkens diesem gegenüber in Richtung senkrecht zur Vorschubbahn der Drahtschar verschiebbar geführt und federbelastet sind, und daß jedem Elektrodenbalken ein Druckbalken zugeordnet ist und zwischen jedem Elektrodenbalken und dem zugeordneten Druckbalken lenkerartige, in sich starre Verbindungselemente vorgesehen sind, welche die Elektrodendrücke auf die Druckbalken übertragen, aber nach Art von Pendelstützen eine Bewegung der Elektrodenbalken im wesentlichen in Richtung parallel zur Vorschubbahn der Drahtschar zulassen, wobei der dem Elektrodenbalken mit den verschiebbar geführten Elektroden zugeordnete Druckbalken in Richtung senkrecht zur Vorschubbahn des Gitters bewegbar gelagert und im Schweißtakt der Maschine im Sinne einer alternierenden Bewegung antreibbar ist.

Bei dieser Maschine können die beiden Elektrodenbalken mit der kontinuierlich vorgeschobenen Drahtschar über eine gewisse, konstruktiv vorgegebene Wegstrecke synchron mitbewegt werden. Die Elektrodenbalken können sehr leicht und frei von starken Massenkräften gebaut werden, weil sie zum Unterschied von den Elektrodenbalken der mit intermittierendem Gittervorschub arbeitenden bekannten Schweißmaschinen keine Elektrodendrücke aufzunehmen brauchen, da diese von den Verbindungselementen auf die Druckbalken übertragen werden.

Der Grundgedanke der Erfindung liegt somit darin, den Antrieb der Elektroden auf zwei Elemente aufzuteilen. Die Anpreßbewegung der Elektroden, bei welcher die Elektroden nur sehr kurze Wegstrecken zurückzulegen haben, jedoch große Kräfte von den Elektroden auf die Drahtknoten senkrecht zu deren Bewegungsrichtung auszuüben sind, wird einem schweren Anpreßbalken erteilt und von diesem über lenkerseitige, in sich starre Verbindungselemente auf die Elektroden übertragen. Die Mitlaufbewegung mit der mit gleichförmiger Geschwindigkeit vorgeschobenen Drahtschar bzw. mit dem geschweißten Gitter, bei welcher die Elektroden größere Wegstrecken als bei der Anpreßbewegung zurückzulegen haben, ohne daß eine Kraftkomponente in dieser Richtung auf das Gitter ausgeübt werden muß, wird allein den Elektrodenbalken erteilt, deren Funktion sich daher allein in der Führung der Elektroden erschöpft.

Die Erfindung wird nun anhand von Ausführungsbeispielen unter Bezugnahme auf die Zeichnungen näher beschrieben. Es zeigen:

Figur 1 eine schematische Seitenansicht einer Gitterschweißmaschine nach einem Ausführungsbeispiel der Erfindung im Längsschnitt;

Figur 2 einen Teil einer Vorderansicht zu Figur 1;

Figur 3 eine alternative Ausführung der Stromanspeisung für die Schweißelektroden.

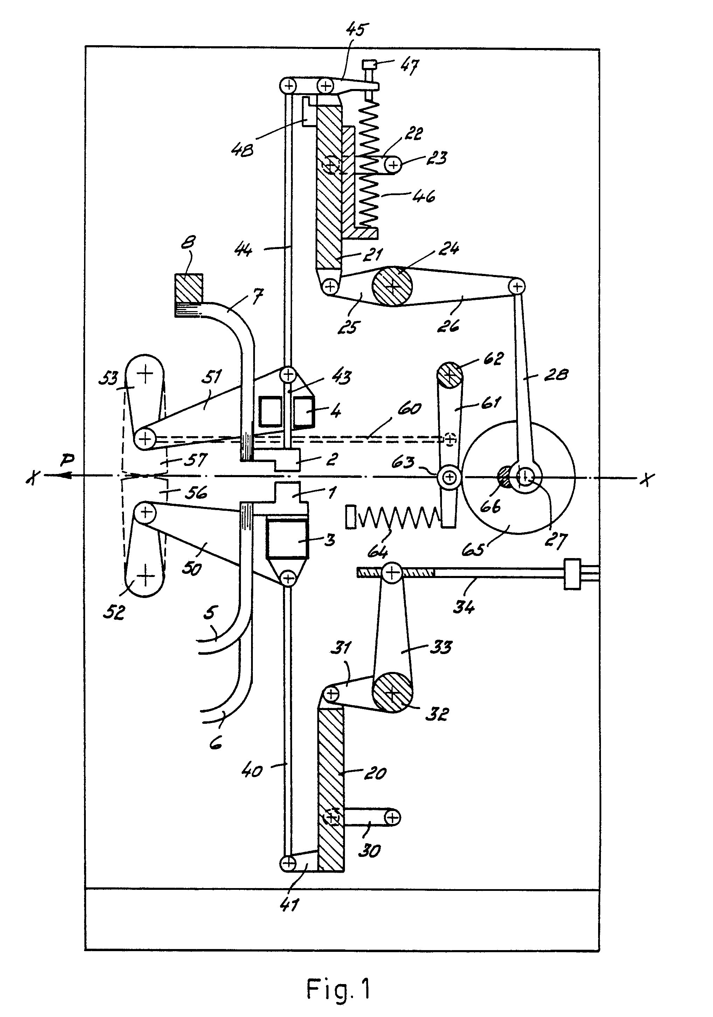

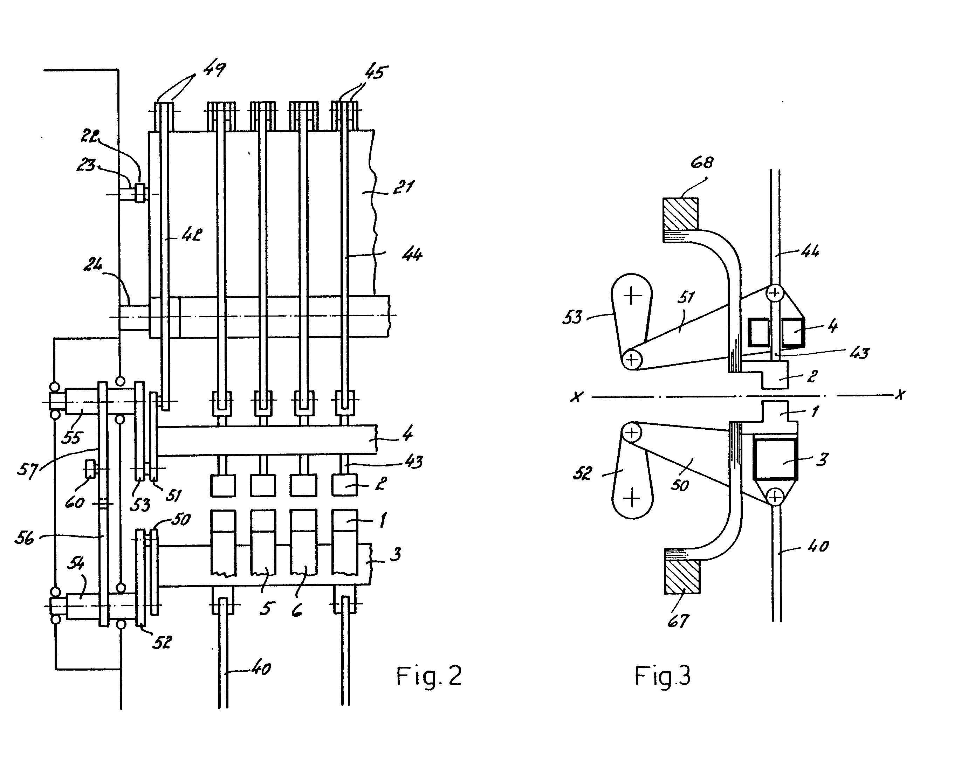

Die Vorschubbahn der Drahtschar und des herzustellenden Gitters ist in den Figuren 1 und 3 mit x-x bezeichnet. Unterhalb und oberhalb dieser Vorschubbahn sind Reihen von Elektroden 1 und 2 in Abständen längs sich über die gesamte Maschinenbreite erstreckender Elektrodenbalken 3 und 4, gegen diese isoliert, angeordnet. Die unteren Elektroden 1 sind beim Ausführungsbeispiel nach Figur 1 einander paarweise zugeordnet und über leitende Bänder 5, 6 mit den Sekundärkreisen nicht dargestellter Transformatoren verbunden. Die oberen Elektroden 2 sind bei diesem Ausführungsbeispiel über leitende Bänder 7 mit einem sich über die gesamte Maschinenbreite erstreckenden Balken 8 aus gut leitendem Material, vorzugsweise aus Kupfer, verbunden, welcher eine für alle oberen Elektroden gemeinsame passive Strombrücke bildet. In Figur 2 sind die leitenden Bänder 5, 6 lediglich angedeutet, die Bänder 7 und der Balken 8 vollständig weggelassen, damit sie nicht für die weitere Beschreibung der Maschine wesentliche Teile verdecken.

Zwei Druckbalken 20, 21 erstrecken sich gleichfalls über die gesamte Maschinenbreite. Diese Balken sind sehr kräftig ausgebildet, um die gesamten beim Schweißvorgang auf das Schweißgut aufzubringenden Druckkräfte ohne meßbare Verformungen aufnehmen zu können.

Der Druckbalken 21 ist an seinen beiden Enden jeweils an einem einarmigen Hebel 22 angelenkt, welcher seinerseits mittels eines Lagerbolzens 23 in einer Wand des Maschinengehäuses schwenkbar gelagert ist.

Eine Welle 24, welche an ihren beiden Enden drehbar im Maschinengehäuse gelagert ist, trägt nahe ihren Enden zwei mit ihr drehfest verbundene einarmige Hebel 25. Die Hebel 25 sind achsparallel zu den Hebeln 22, gleich lang wie diese und ebenfalls mit dem Druckbalken 21 gelenkig verbunden. Die Hebel 22 und 25 bilden daher eine Parallelogrammführung für den Druckbalken 21. An einem weiteren einarmigen Hebel 26, welcher drehfest mit der Welle 24 verbunden ist, greift eine von einem Exzenter 27 antreibbare Pleuelstange 28 an. Die Teile 25 bis 28 sind zur Vereinfachung von Figur 2 in dieser nicht dargestellt.

Der Druckbalken 20 könnte feststehend im Maschinengehäuse angeordnet sein, vorzugsweise ist er jedoch ähnlich wie der Druckbalken 21 beweglich gelagert. Zu diesem Zweck ist er an jedem Ende an zwei einarmigen Hebeln 30 und 31 angelenkt, die wieder eine Parallelogrammführung bilden und von welchen der Hebel 31 drehfest mit einer im Maschinengehäuse drehbar gelagerten Welle 32 verbunden ist, während der Hebel 30 unmittelbar im Maschinengehäuse schwenkbar gelagert ist. Ein weiterer einarmiger Hebel 33, der mit der Welle 32 drehfest verbunden ist, gestattet über eine von Hand betätigbare Spindel 34 eine Höhenverstellung des Druckbalkens 20. Dadurch ist es möglich, den Druckbalken 20 stets so einzustellen, daß, unabhängig von der Dicke oder dem Abnützungsgrad der Elektroden und unabhängig von der je nach den Durchmessern der zu verschweißenden Drähte unterschiedlichen Dicke der Drahtknoten stets ein befriedigender Kontakt der Elektroden mit dem Schweißgut sichergestellt wird.

Der untere Elektrodenbalken 3 ist über Druckstangen 40, welche sowohl mit diesem Elektrodenbalken als auch mit je einem Tragarm 41 des zugeordneten Druckbalkens 20 gelenkig verbunden und daher als Pendelstützen ausgebildet sind, gegenüber dem Druckbalken 20 abgestützt. Diese Druckstangen 40 verbinden den Elektrodenbalken 3 und den Druckbalken 20 derart miteinander, daß sich der Elektrodenbalken 3 lediglich in einer Richtung, die im wesentlichen parallel zur Drahtvorschubbahn x-x ist, relativ zum Druckbalken 20 bewegen kann.

Um die Biegebeanspruchungen des Elektrodenbalkens 3 möglichst gering zu halten, sind die Druckstangen 40 in regelmäßigen Abständen längs des Elektrodenbalkens 3 angeordnet. Im dargestellten Ausführungsbeispiel ist jeweils jede dritte Elektrode 1 mittels einer Druckstange 40 gegen den Druckbalken 20 abgestützt. Dadurch werden die bei der Bewegung des Elektrodenbalkens 3 auftretenden Massenkräfte so weit wie möglich reduziert und damit wird letztlich Antriebsleistung eingespart.

Beim oberen Elektrodenbalken 4 könnte die Kraftübertragung auf ähnliche Weise erfolgen, nur daß die einzelnen Elektroden 2 durch individuell vorspannbare, gleitfähig im Elektrodenbalken geführte Federstößel beim Absenken des Druckbalkens 21 gegen das Schweißgut angepreßt werden müßten. Vorzugsweise wird jedoch die in den Figuren 1 und 2 dargestellte Art der Kraftübertragung gewählt. Hiebei ist jede Elektrode 2 mittels einer Führungsstange 43 gleitfähig im Elektrodenbalken 4 geführt. An jede Führungsstange 43 ist eine Druckstange 44 angelenkt, welche ihrerseits mit dem vorzugsweise gabelförmigen Endteil des einen Armes eines zweiarmigen Hebels 45 gelenkig verbunden ist. Der zweiarmige Hebel 45 ist am Druckbalken 21 schwenkbar gelagert. Der zweite Arm dieses Hebels ist durch eine Druckfeder 46, die sich ebenfalls am Druckbalken 21 abstützt und deren Spannung durch eine Stellschraube 47 veränderbar ist, belastet. Ein Anschlag 48 begrenzt die Bewegungsmöglichkeit des zweiarmigen Hebels. Durch diese Anordnung wird der Anpreßdruck vom Druckbalken unmittelbar auf die einzelnen Elektroden übertragen. Der Elektrodenbalken bleibt daher völlig unbelastet und dient lediglich der Führung der Elektroden bei ihrer Bewegung parallel zur Gittervorschubbahn.

An den beiden Enden der Elektrodenbalken 3, 4 ist je eine Endscheibe 50, 51 angeordnet. Ein Eckpunkt der Endscheibe 51 ist an einen Lenker 42 angelenkt, dessen anderes Ende mit einem gabelförmig ausgebildeten Tragarm 49 des Druckbalkens 21 gelenkig verbunden ist, wodurch auch der Elektrodenbalken 4 so geführt wird, daß er sich im wesentlichen nur parallel zur Drahtvorschubbahn x-x relativ zum Druckbalken 21 bewegen kann. In Figur 1 werden der Lenker 42 und der Tragarm 49 durch die in gleicher Flucht liegenden Druckstangen 44 und Hebel 45 verdeckt.

Weiters sind homologe Eckpunkte der Endscheiben 50, 51 gelenkig mit je einem zugeordneten Lenker 52, 53 verbunden, welcher drehfest an einer in einer Maschinenwand schwenkbar gelagerten Welle 54, 55 angeordnet ist. Mit jeder Welle 54, 55 ist ein Zahnsegment 56, 57 verbunden. Die beiden Zahnsegmente kämmen miteinander und erzwingen auf diese Weise eine synchrone Bewegung der beiden Elektrodenbalken 3, 4 in Richtung des Pfeiles P in Figur 1 parallel zur Drahtvorschubbahn x-x.

Das Zahnsegment 57 ist gelenkig mit dem einen Ende einer Kupplungsstange 60 verbunden, deren anderes Ende an einem von zwei parallelen einarmigen Hebeln 61, die drehfest mit einer Welle 62 verbunden sind, angelenkt ist, während der zweite der Hebel 61 eine Nockenabtastrolle 63 trägt. Die gemeinsame Welle 62 zwingt beide Hebel 61 der ihnen von einem Nocken 65 über die Abtastrolle 63 erteilten Bewegung zu folgen. Eine Druckfeder 64 belastet die Hebel 61 in Richtung auf den Nocken 65. In Figur 1 ist der Nocken 65 der einfachen Darstellung wegen durch einen exzentrischen Kreis um eine Nockenwelle 66 symbolisiert.

Während die Ausführungsform nach den Figuren 1 und 2 eine in bekannter Weise mit Wechselstrom zu betreibende Schweißmaschine darstellt, erläutert Figur 3 die Möglichkeit, die Elektroden 1, 2 mit Gleichstrom zu speisen. Zu diesem Zweck sind zwei bezüglich der Drahtvorschubebene x-x symmetrisch angeordnete Stromschienen 67, 68 vorgesehen, von denen eine mit dem positiven Pol und die andere mit dem negativen Pol einer Gleichstromquelle verbunden ist.

Die Stromzuführung zu diesen Stromschienen erfolgt seitlich außerhalb des Maschinenrahmens in solcher Weise, daß die eine Sammelschiene an ihrem dem Betrachter zugekehrten Ende, die andere Sammelschiene jedoch an dem vom Betrachter der Figur 3 entfernt liegenden Ende mit dem der betreffenden Sammelschiene zugeordneten Pol der Gleichstromquelle verbunden ist.

Die Maschine nach dem Ausführungsbeispiel der Erfindung funktioniert wie folgt:

In Ruhestellung steht das Exzenter 27 in seiner unteren Totpunktlage. Sobald die Nockenwelle 66 und der Nocken 65 sich zu drehen beginnen, beginnt sich die Pleuelstange 28 nach oben zu bewegen und schwenkt den einarmigen Hebel 26 im Gegenuhrzeigersinn, wodurch der Druckbalken 21 parallel zu sich selbst nach unten bewegt wird. Diese Bewegung überträgt sich über die Lenker 42 (Figur 2) auf den Elektrodenbalken 4 und gleichzeitig über die Druckstangen 44 auch auf die Elektroden 2. Zugleich mit dieser Bewegung beginnt der Nocken 65 die Abtastrolle 63 in Richtung des die Schweißgutbewegung darstellenden Pfeiles P zu beschleunigen. Diese Bewegung überträgt sich über die Kupplungsstange 60 auf das Zahnsegment 57 und von diesem einerseits über die Welle 55 auf den Lenker 53, von diesem auf die Endscheibe 51 und damit schließlich auf den oberen Elektrodenbalken 4, und andererseits über das Zahnsegment 56, die Welle 54, den Lenker 52 und die Endscheibe 50 auf den unteren Elektrodenbalken 3. Die beiden Elektrodenbalken 3, 4 beginnen sich daher gemeinsam im Sinne einer Mitlaufbewegung mit dem auf bekannte und deshalb nicht dargestellte Weise kontinuierlich vorgeschobenen Schweißgut zu bewegen und nehmen die von ihnen getragenen bzw. geführten Elektroden 1 bzw. 2 bei dieser Bewegung mit.

Gleichzeitig nähern sich der obere Elektrodenbalken 4 und mit diesem die oberen Elektroden 2 zufolge der Abwärtsbewegung des Druckbalkens 21 dem Schweißgut von oben.

Der Nocken 65 ist so geformt, daß die Elektrodenbalken 3, 4 kurz bevor die oberen Elektroden 2 auf dem Schweißgut aufsetzen, die gleiche Geschwindigkeit wie das kontinuierlich vorgeschobene Schweißgut erreichen und von diesem Augenblick an mit konstanter Geschwindigkeit weiterbewegt werden. Sobald die oberen Elektroden 2 auf die zu schweißenden Drahtknoten aufsetzen, beenden sie ihre Bewegung in lotrechter Richtung, ihre Führungsstangen 43 beginnen in dem sich weiter abwärts bewegenden Elektrodenbalken 4 zu gleiten. Da auch der Druckbalken 21 seine Abwärtsbewegung noch weiter fortsetzt, beginnen die zweiarmigen Hebel 45 sich um ihre Lagerbolzen im Uhrzeigersinn zu drehen, wobei die Druckfedern 46 gespannt werden und der erforderliche Schweißdruck erzeugt wird.

Nun kann der Schweißstrom eingeschaltet werden. Nach Durchlaufen des oberen Totpunktes des Exzenters 27 kehrt sich die Bewegung des Druckbalkens 21 um, der Druckbalken 21 und mit ihm der Elektrodenbalken 4 beginnen, sich aufwärts zu bewegen. Die oberen Elektroden 2 bleiben jedoch weiterhin auf dem Schweißgut ruhen, bis sich die Druckfedern 46 so weit entspannt haben, daß die zweiarmigen Hebel 45 durch den Anschlag 48 an einer weiteren Drehung im Gegenuhrzeigersinn behindert werden.

In der Zwischenzeit ist der Schweißstrom, kurz nachdem der Exzenter 27 den oberen Totpunkt durchlaufen hat, abgeschaltet worden. Solange die Druckfedern 46 noch gespannt sind, pressen die Elektroden 1, 2 die bereits verschweißten Drahtknoten zusammen, um eine Konsolidierung der Schweißstellen zu begünstigen.

Sobald die Elektroden 2 vom Schweißgut abgehoben haben, gibt der Nocken 65 die Abtastrolle 63 frei, worauf sich die Druckfeder 64 entspannt und dabei die Elektrodenbalken 3, 4 in ihre Ausgangslage zurückführt.

An Stelle der gezeigten Ausführung könnte selbstverständlich auch ein Nocken mit einer eingeschnittenen Führungsnut vorgesehen werden, in welche die Abtastrolle eingreift, so daß sowohl die Arbeits- als auch die Rückstellbewegung der Elektrodenbalken unmittelbar vom Nocken selbst gesteuert werden. In diesem Falle kann die Druckfeder 64 natürlich entfallen.

Der Antrieb der den Exzenter 27 und den Nocken 65 tragenden Welle 66 kann unter Zwischenschaltung eines entsprechenden Untersetzungsgetriebes von der Hauptantriebswelle der Schweißmaschine aus erfolgen. In diesem Falle ist es allerdings nur möglich, Gitter mit einem ganz bestimmten, konstruktiv vorgegebenen gegenseitigen Abstand der Schweißpunktreihen zu schweißen.

Sollen Gitter geschweißt werden, bei welchen die gegenseitigen Abstände der Schweißpunktreihen eine beliebige wählbare Größe haben, was in der Regel der Fall sein wird, dann muß zwischen der Hauptantriebswelle der Schweißmaschine und der Welle 66 eine Eintourenkupplung zwischengeschaltet werden. Beim Einschalten dieser Kupplung beginnt die Nockenscheibe 65 sich zu drehen und löst alle bereits beschriebenen Bewegungsabläufe aus. Nach Verschweißen einer Reihe von Drahtknoten und Rückkehr der Elektrodenbalken 3, 4 und des Druckbalkens 21 in ihre Ausgangslagen wird die Kupplungsverbindung zwischen der Hauptantriebswelle der Maschine und der Welle 66 automatisch wieder unterbrochen.

Das mit gleichmäßiger Geschwindigkeit vorgeschobene Schweißgut legt nun eine gewisse Wegstrecke zurück, bis eine weitere Serie von in einer Flucht liegenden Drahtknoten in den Schweißbereich gelangt und die Eintourenkupplung durch elektronische Steuerelemente wieder eingeschaltet wird.

Es ist schließlich auch möglich, einen völlig getrennten Antrieb für die Nockenwelle 66 vorzusehen. Dazu kann beispielsweise ein hydraulischer Motor dienen, der mittels elektrohydraulischer Ventile von einem zentralen Steuergerät elektronisch steuerbar ist.

Anstelle der lediglich als Ausführungsbeispiel geschilderten Antriebe durch Nocken und Exzenter könnten natürlich auch andere Antriebsmittel, z. B. zwei von elektrohydraulischen Servoventilen ansteuerbare hydraulische Arbeitszylinder, einer für den Antrieb der Elektrodenbalken und einer für den Antrieb des Anpreßbalkens, Anwendung finden.

**Patentansprüche**

1. Nach der elektrischen Widerstandsmethode arbeitende Gitterschweißmaschine mit kontinuierlichem Vorschub einer Drahtschar in Längsrichtung (P) der herzustellenden Gitterbahn und oberhalb und unterhalb dieser Drahtschar angeordneten Reihen von Elektroden (1) und Gegenelektroden (2), dadurch gekennzeichnet, daß die Elektroden (1) und die Gegenelektroden (2) in Abständen längs zweier im wesentlichen parallel zur Vorschubbahn (x-x) der Drahtschar in deren Längsrichtung hin- und herbewegbar gelagerter, auf gemeinsame Bewegung gekuppelter und im Schweißtakt antreibbarer Elektrodenbalken (3, 4) angeordnet sind, wobei zumindest die Elektroden (2) eines Elektrodenbalkens (4) diesem gegenüber in Richtung senkrecht zur Vorschubbahn (x-x) der Drahtschar verschiebbar geführt und federbelastet sind, und daß jedem Elektrodenbalken (3, 4) ein Druckbalken (20, 21) zugeordnet ist und zwischen jedem Elektrodenbalken (3, 4) und dem zugeordneten Druckbalken (20, 21) lenkerartige, in sich starre Verbindungselemente (40, 44) vorgesehen sind, welche die Elektrodendrücke auf die Druckbalken (20, 21) übertragen, aber nach Art von Pendelstützen eine Bewegung der Elektrodenbalken im wesentlichen in Richtung parallel zur Vorschubbahn (x-x) der Drahtschar zulassen, wobei der dem Elektrodenbalken (4) mit den verschiebbar geführten Elektroden (2) zugeordnete Druckbalken (21) in Richtung senkrecht zur Vorschubbahn (x-x) des Gitters bewegbar gelagert und im Schweißtakt der Maschine im Sinne einer alternierenden Bewegung antreibbar ist.

2. Gitterschweißmaschine nach Anspruch 1, dadurch gekennzeichnet, daß der eine - vorzugsweise der unten liegende - Elektrodenbalken (3) mittels in gleichmäßigen Abständen längs des Elektrodenbalkens (3) angeordneter, am Elektrodenbalken (3) und an Tragarmen (41) des Druckbalkens (20) gelenkig abgestützter Druckstangen (40) mit dem Druckbalken (20) verbunden ist.

3. Gitterschweißmaschine nach Anspruch 2, dadurch gekennzeichnet, daß der untere Elektrodenbalken (3) im Maschinenrahmen in Richtung senkrecht zur Vorschubbahn (x-x) der Drahtschar verstellbar gelagert und mit einer Verstelleinrichtung (31 - 34) versehen ist.

4. Gitterschweißmaschine nach einem der Ansprüche 1 bis 3, dadurch gekennzeichnet, daß an dem - vorzugsweise oben liegenden - Elektrodenbalken (4), in dem die Elektroden (2) verschiebbar geführt sind, nahe seinen Enden Lenker (42) angelenkt sind, welche gelenkig mit Tragarmen (49) des Druckbalkens (21) verbunden sind, und daß jede Elektrode (2) am einen Ende einer den Elektrodenbalken (4) gleitfähig durchsetzenden Führungsstange (43) angeordnet ist, deren anderes Ende über eine Druckstange (44) gelenkig mit einem am Druckbalken (21) angelenkten, im Sinne einer Anpreßbewegung der Elektroden (2) an das Schweißgut federbelasteten zweiarmigen Hebel (45) verbunden ist.

5. Gitterschweißmaschine nach einem der Ansprüche 1 bis 4, dadurch gekennzeichnet, daß an jedem Elektrodenbalken (3, 4) Endscheiben (50, 51) angebracht sind, von welchen jeweils ein Eckpunkt an einem Lenker (52, 53) angelenkt ist, und daß jeder Lenker (52, 53) zusammen mit einem von zwei in dauerndem Eingriff stehenden Zahnsegmenten (56, 57) drehfest auf einer Welle (54, 55) angeordnet ist.

**Claims**

1. A grid welding machine working according to the electrical resistance welding method with continuous feed of a family of wires in the direction (P) longitudinal to the grip strip which is to be produced and rows of electrodes (1) and counterelectrodes (2) arranged above and below this family of wires, characterized in that the electrodes (1) and the counterelectrodes (2) are arranged at intervals along two electrode beams (3, 4) which are supported to be able to move to and fro essentially in parallel with the path (x-x) of advance of the family of wires in their longitudinal direction, are coupled in a common motion and may be driven at the welding rhythm, where the electrodes (2) on at least one of the electrode beams (4) are guided to be able to shift with respect to it in the direction perpendicular to the path (x-x) of advance of the family of wires and are spring-loaded, and that a pressure beam (20, 21) is associated with each electrode beam (3, 4) and like links between each electrode beam (3, 4) and the associated pressure beam (20, 21) connector members (40, 44), rigid in themselves, are provided, which transmit the electrode pressures to the pressure beams (20, 21) but allow a motion of the electrode beams essentially in the direction parallel with the path (x-x) of advance of the family of wires, the pressure beam (21) which is associated with the electrode beam (4) having the electrodes (2) guided to be able to shift, being supported to be able to move in the direction perpendicular to the path (x-x) of advance of the grid and being able to be driven in the sense of alternating motion at the welding rhythm of the machine.

2. A grid welding machine as in claim 1, characterized in that the one electrode beam (3), preferably the one lying underneath, is connected to the pressure beam (20) by means of thrust rods (40) arranged at uniform intervals along the electrode beam (3) and bearing by hinges against the electrode beam (3) and against supporting arms (41) from the pressure beam (20).

3. A grid welding machine as in claim 2, characterized in that the lower electrode beam (3) is supported in the machine frame to be adjustable in the direction perpendicular to the path (x-x) of advance of the family of wires and is provided with an adjusting device (31-34).

4. A grid welding machine as in one of claims 1 to 3, characterized in that to the electrode beam (4) preferably the one which lies above - in which the electrodes (2) are guided to be able to shift, links (42) are hinged near its end and are connected by hinges to supporting arms (49) from the pressure beam (21), and that each electrode (2) is arranged at one end of a guide rod (43) which passes slidably through the electrode beam (4) and the other end of which is connected via a thrust rod (44) to a hinge on a two-armed lever (45) hinged onto the pressure beam (21) and spring-loaded in the direction of a pressing motion of the electrodes (2) against the material to be welded.

5. A grid welding machine as in one of claims 1 to 4, characterized in that end plates (50, 51) are fitted to each electrode beam (3, 4), one corner of each of them being hinged to a link (52, 53), and that each link (52, 53) is arranged on one shaft (54, 55) to rotate together with one of two toothed segments (56, 57) which are permanently in mesh.

## Revendications

1. Soudeuse de treillis électrique par résistance, dans laquelle un faisceau de fils avance de manière continue dans le sens longitudinal de la nappe de treillis à fabriquer et des rangées d'électrodes et de contre-électrodes sont montées au-dessus et en dessous du faisceau de fils, caractérisée en ce que les électrodes (1) et les contre-électrodes (2) sont montées à distance les unes des autres le long de deux poutres porte-électrodes (3, 4) essentiellement parallèles au trajet d'avancement (x-x) du faisceau de fils, mobiles en va-et-vient dans leur sens longitudinal, couplées en vue d'un déplacement commun et pouvant être entraînées en synchronisme, étant entendu qu'au moins les électrodes (2) d'une poutre porte-électrodes (4) sont guidées à coulissement par rapport à cette poutre dans un sens perpendiculaire au trajet d'avancement (x-x) du faisceau de fils et sont sollicitées par ressort, et qu'à chaque poutre porte-électrodes (3, 4) est associée une poutre de pression (20, 21), des éléments de liaison articulée (40, 44) essentiellement rigides étant prévus entre chaque poutre porte-électrodes (3, 4) et la poutre de pression associée (20, 21) pour transférer la pression des électrodes sur les poutres de pression (20, 21), tout en permettant un déplacement des poutres porte-électrodes dans un sens essentiellement parallèle au trajet d'avancement (x-x) du faisceau de fils, la poutre de pression (21) associée à la poutre porte-électrodes (4) comprenant les électrodes (2) guidées à coulissement étant montée mobile dans un sens perpendiculaire au trajet d'avancement (x-x) du treillis et pouvant être entraînée en synchronisme avec la machine dans le sens d'un mouvement alternatif.

2. Soudeuse de treillis suivant la revendication 1, caractérisée en ce que la première poutre porte-électrodes, de préférence la poutre porte-électrodes inférieure (3) est reliée à la poutre de pression (20) au moyen de bielles de compression (40) montées à intervalles égaux le long de la poutre porte-électrodes (3) et prenant appui de manière articulée sur la poutre porte-électrodes (3) et sur des bras de support (41) de la poutre de pression (20).

3. Soudeuse de treillis suivant la revendication 2, caractérisée en ce que la poutre porte-électrodes inférieure (3) est montée réglable dans le bâti de la machine dans un sens perpendiculaire au trajet d'avancement (x-x) du faisceau de fils et est pourvue d'un dispositif de réglage (31-34).

4. Soudeuse de treillis suivant l'une quelconque des revendications 1 à 3, caractérisée en ce qu'à la poutre porte-électrodes (4), de préférence supérieure, dans laquelle les électrodes (2) sont guidées à coulissement, au voisinage de ses extrémités, sont articulés des bras oscillants (42) qui sont articulés à des bras de support (49) de la poutre de pression (21) et chaque électrode (2) est montée sur une extrémité d'une tige de guidage (43) qui traverse à coulissement la poutre porte-électrodes (4), l'autre extrémité de la tige de guidage étant reliée, par l'intermédiaire d'une bielle de compression (44) d'une manière articulée, à un levier à deux bras (45) articulé à la poutre de pression (21) et rappelé par ressort dans le sens d'un mouvement de compression des électrodes (2) sur la matière à souder.

5. Soudeuse de treillis suivant l'une quelconque des revendications 1 à 4, caractérisée en ce que des plaques d'extrémité (50, 51) sont montées sur chaque poutre porte-électrodes (3, 4), un coin de chacune de ces plaques étant articulé à un bras oscillant (52, 53) et chaque bras oscillant (52, 53) est calé sur un arbre (54, 55) en compagnie de l'un de deux segments dentés (56, 57) continuellement en prise.

**Fig.1**

Fig. 2

Fig.3

0 150 704